# EUROPEAN PATENT APPLICATION

(11) **EP 1 845 073 A1**
(43) Date of publication of application: **17.10.2007**
(21) Application number: 06112439.2
(22) Date of filing: 10.04.2006
(51) Int. Cl.: C04B 35/486, C04B 41/86, C04B 41/87, C04B 35/636

(54) **Compositions comprising nanoparticles of zirconium hydroxide and/or glass frits for coating ceramic products**

(71) Applicant: Consorzio Interuniversitario per lo Sviluppo dei Sistemi a Grande Interfase, C.S.G.I, 50121 Firenze (IT)
(72) Inventor: Bagliono, Piero, 50140 FIESOLE (IT); Ambrosi, Moira, 50019 SESTO FIORENTINO (IT); Dei, Luigi, 50121 FIESOLE (IT); Faneschi, Mauro, 53034 MONTERIGGIONI (IT); Mancioli, Luiciano, 50056 MONTELUPO FIORENTINO (IT); Santoni, Sergio, 56033 CAPANNOLI (IT)
(74) Representative: Gervasi, Gemma

(57) **Abstract**

The present invention refers to compositions for the coating of ceramic supports comprising micronized glass frits and/or nanosized zirconium hydroxide.

## Description

### Field of the invention

The invention relates to the field of materials useful in the production of ceramic products.

### State of the art

The international scientific literature pertinent to the synthesis and characterization of metal oxides and hydroxides having dimensions of less than a micrometer down to the order of a few tens of nanometers is notable and offers an extremely wide range of possibilities for the production of said materials. Their use to produce coatings with high covering power, high adhesion to the support and optimal homogeneity has been described. It was suggested that the coating would confer innovative, though non-specified, working performance to the finished product.

In PCT/EP03/03328 (in the name of the same Applicant) the preparation of zirconium, zinc, titanium, aluminium, nickel, cobalt, iron and magnesium oxides and hydroxides nanoparticles is described as well as their application in traditional ceramic industry.

The improvement of both mechanical and soil resistance properties of ceramic products are central issues in the sector of manufacturing high quality flooring and coating materials. Demand for products that combine several finishes with technology, thus suitable for any ambience, is continuously increasing.

As it is known, by coating either a finished or crude ceramic support with a powder of glassy material (commonly called "frit" and consisting of a mixture of oxides melted, rapidly cooled down and finally ground) and by subsequent baking it at temperatures ranging between 600 and 1450 °C, a more or less transparent layer can be obtained, depending on the frit used. The coating strongly affects the ceramic properties, simultaneously acting as protective agent and enhancing the support homogeneity. Thus, the finished ceramic becomes suitable for a wide range of applications, such as floorings, coatings, dishes and crockery, table and kitchen products, sanitary and high tech objects like insulators. Although the glassy layer protects the possible underglaze decoration and reduces stain penetration, the need of relatively high thickness results in a remarkable decrease of mechanical properties, such as hardness and resistance to abrasion, so accelerating the product usury. Evolution in monocottura and porcelain stoneware manufacturing allowed production of tiles with more homogeneous composition, harder and more resistant to abrasion, slip and low temperatures than the traditional glazed ceramics. Nevertheless, due to their natural surface microporosity, non-glazed monocottura and porcelain stoneware are susceptible to dirt penetration and therefore scarcely stain resistant.

### Detailed description of the invention

The present invention allows to solve the above mentioned stain resistance problem with simultaneous enhancement of hardness and resistance to usury.

In fact, it was found that by applying nanosized zirconia or micronized glass frits or their mixtures to ceramic supports both mechanical and stain resistance properties are improved.

According to the invention zirconium hydroxide with 50% purity can be used, preferred is 80% pure zirconium hydroxide, more preferred is 99% pure zirconium hydroxide.

According to the invention, the frits used are those normally employed in the ceramic field for the production of glazes.

A typical frit has, for example, the following composition:

| Component (oxide) | Amount (%) |
|---|---|
| SiO₂ | 5-90 |
| Li₂O | 0-20 |
| Na₂O | 0-20 |
| K₂O | 0-15 |
| MgO | 0-25 |
| CaO | 0-60 |
| SrO | 0-20 |
| BaO | 0-55 |
| B₂O₃ | 0-55 |
| Al₂O₃ | 0-45 |
| Fe₂O₃ | 0-20 |
| Sb₂O₃ | 0-10 |
| TiO₂ | 0-20 |
| ZrO₂ | 0-25 |
| PbO | 0-80 |
| ZnO | 0-60 |
| P₂O₅ | 0-40 |
| CeO₂ | 0-10 |
| SnO₂ | 0-20 |
| HfO₂ | 0-5 |
| WO₃ | 0-10 |
| MoO₃ | 0-10 |
| SO₃ | 0-40 |
| Cr₂O₃ | 0-10 |
| MnO | 0-10 |
| CoO | 0-10 |
| CuO | 0-10 |

According to the invention, the micronized glass frit have dimensions ranging between 0.1 and 80 µm, preferably in the range 0.1-30 µm, particularly preferred within 0.1-15µm. Preferably 65% of particles possess dimension lower than 3 µm, more preferably with 25% lower than 1 µm.

According to the invention, nanosized zirconium hydroxide particles have dimensions comprised between 10 and 1000 nm, particularly preferred between 10 and 500 nm.

The above said micronized glass frit is obtained by grinding of traditionally produced frits. The nanosized zirconium hydroxide particles are obtained in the form of gel when, for example, the corresponding zirconyl chloride octahydrate (ZrOCl₂·8H₂O) is reacted with a base, for example NaOH, in the presence of water or of an organic solvent as described in the above said PCT/EP03/03328. Synthesis condition can be optimized for example by varying supersaturation degree and/or temperature and/or by vigorously stirring at 6500-24000 rpm. The obtained gel is possibly purified and thereafter directly dispersed in the appropriate liquid medium without previous drying.

Thereafter the above said compounds can be mixed in the wanted quantities in order to obtain the desired mixtures.

In order to be applied to the ceramic support the above said products must be suspended in an appropriate liquid.

Therefore the micronized and or nanosized particles are dispersed in water or in organic solvents with low environmental impact (as for example ethanol, propanol and isopropanol) with the help of ultrasound or metallic paddle mechanical homogenizer, preferably water is used as liquid medium.

Zirconium hydroxide dispersions have, according to the invention, concentration comprised between 0.1 % and 10%, preferably between 0.1 % and 5%, particularly preferably between 0.1 % and 3.5%, wherein said concentration is referred to ZrO₂ obtained from the hydrozide by calcination and is expressed in w/w%.

According to the invention, frit suspensions have concentration between 1 % and 40%, preferably between 1 % and 25%.

According to the invention, the above said zirconium hydroxide and frit dispersions are mixed in the ratio between 1:1 and 10:1.

The use of frits having dimensions comprised between 0.1 - 15 µm is particularly preferred when ceramic supports having anti-slip and anti-stain properties, particularly suitable for exteriors, are desired.

According to the invention, suspensions viscosity can be increased by adding appropriate amounts of gellants, with formation either of viscous suspensions or of gels. Gelling agents are, according to the invention, cellulose, modified celluloses, starch, guar gums, xanthan gums. The amount of gellants is according to the invention between 0.1% to 10%, preferably within 0.1-1% for viscous suspensions, and between 2-5% for gels.

Suspending agents may be added to favor and prolong zirconium hydroxide and frit dispersion. According to the invention, suspending agents are sodium polyphosphates, group I and II chlorides, hydroxides, carbonates, sodium silicate, oxalates, sodium humate and tannate, polyacritales, bentonite. The amount of suspending agent used ranges between 0.1 and 1% of dry suspended material. When bentonite is used, its amount varies in the range 0.5-2%.

The obtained suspension is sprayed onto the crude ceramic surface and nanosized zirconia is obtained *in situ* during the baking cycle. The desired amount of zirconium hydroxide or of zirconium hydroxide/frit mixture is deposited filling the microporoes of the crude material. During baking, glass melts within surface cavities filling them and making the final product smooth and stain resistant. Zirconia is formed above 500 °C by calcinations of the hydroxide.

According to the invention, the amount of zirconium hydroxide applied per square meter ranges between 0 and 40 g, preferably within 0 and 25 g; said amount is referred to ZrO₂ obtained from the hydroxide by calcination.

The amount of dry frit applied per square meter ranges between 0 and 100 g, preferably between 0 and 70 g.

The modest cost and versatility makes the application procedure easily extendible on an industrial scale.

Treated items posses innovative, enhanced working performance, maintaining unaltered the optical characteristics of the original material. Several ceramic products can thus be obtained, joining the possibility of a wide range of finishes with technology.

The treatment procedures for different ceramic supports are illustrated in the following Examples.

In the Examples, frits having the following chemical composition and physical properties are used.

Glass frits composition and properties

| | Frit A | Frit B | Frit C | Frit D | Frit E | Frit F |
|---|---|---|---|---|---|---|
| Composition (%) | | | | | | |
| SiO₂ | 38.8 | 40.4 | 57.0 | 61.4 | 74.1 | 79.3 |
| Li₂O | 2.2 | | | | | |
| Na₂O | 1.3 | 0.3 | 2.6 | 2.8 | 0.7 | 0.2 |
| K₂O | 0.9 | 0.1 | 2.9 | 1.0 | 3.9 | 1.3 |
| MgO | 0.3 | 0.5 | 0.2 | 1.5 | 1.8 | 1.1 |
| CaO | 2.2 | 32.0 | 5.2 | 12.3 | 5.6 | 4.3 |
| BaO | 10.8 | 0.1 | 1.8 | | | |
| B₂O₃ | 2.5 | 12.4 | 12.2 | | | |
| Al₂O₃ | 9.9 | 3.4 | 10.7 | 9.8 | 13.2 | 13.6 |
| Fe₂O₃ | 0.1 | 0.1 | 0.2 | 0.2 | 0.1 | |
| TiO₂ | 0.1 | 0.1 | | | 0.1 | 0.1 |
| ZrO₂ | 0.1 | 3.0 | 5.2 | 4.2 | | |
| PbO | 29.5 | 6.5 | | | | |
| ZnO | 1.3 | 1.2 | 1.2 | 4.3 | | |
| SnO₂ | | | | 2.2 | | |

| Density (g/mL) | | | | | | |
|---|---|---|---|---|---|---|
| | 3.5 | 2.9 | 2.6 | 2.7 | 2.4 | 2.3 |

| Refractive Index | | | | | | |
|---|---|---|---|---|---|---|
| | 1.6 | 1.6 | 1.5 | 1.5 | 1.4 | 1.4 |

| Linear dilation coefficient (×10⁷) | | | | | | |
|---|---|---|---|---|---|---|
| | 60 | 64 | 57 | 64 | 54 | 45 |

| Heating microscope (°C) | | | | | | |
|---|---|---|---|---|---|---|
| Sintering Edge | 639 | 741 | 782 | 1108 | 1173 | 1201 |
| softening point | 767 | 830 | 977 | 1173 | 1222 | 1440 |
| Sphere | 946 | 851 | 1006 | 1188 | 1289 | 1485 |
| Hemisphere | 977 | 1043 | 1095 | 1239 | 1312 | 1505 |
| Melting | 996 | 1063 | 1170 | 1262 | 1365 | 1580 |

### Example 1

A 0.75% water dispersion, referred to ZrO₂ obtained from the hydroxide by calcination, of pure nanosized zirconium hydroxide was applied onto a crude, non-glazed porcelain stoneware tile. The application could be performed either by spraying or by serigraphy spreading a viscous suspension obtained by addition of the appropriate gelling agent. When low viscosity suspension was used, suspending agents, such as bentonite, could be employed in order to favor/prolong particles dispersion. The tile was subjected to a baking cycle of 60 minutes in length with maximum temperature of 1210 °C. The amount of ZrO₂ applied per square meter was 11.2 g. The resultant tile preserved the original appearance of the untreated material. Zirconia nano- and micro-aggregates were formed by sintering of nanoparticles. Aggregates, included into the material surface layer, were homogeneously distributed throughout the sample. The treated tile exhibited excellent mechanical properties, such as a Vickers hardness of 4900 and significantly enhanced resistance to usury. Moreover, the treated sample possessed the same wettability of the original, untreated material.

### Example 2

A 0.75% water dispersion of pure nanosized zirconium hydroxide was applied onto a crude, glazed porcelain stoneware tile. Application was carried out as described in Example 1. When a gel was applied, the tile was previously treated by polyvinyl alcohol in order to protect the glaze layer. The tile was subjected to a baking cycle of 60 minutes in length with maximum temperature of 1210 °C. The amount of ZrO₂ applied per square meter was 11.2 g. After baking, the ceramic support preserved the original appearance, with no variation of glaze color. Zirconia nanoparticles with diameter ranging between 100 and 500 nm are visible as individual units forming ZrO₂ clusters. Vickers hardness was about 1200, doubled compared to that of the corresponding untreated ceramic. Resistance to mechanical abrasion was also remarkably enhanced. While the critical surface tension strongly increased, the porosity of the surface layer remained unaffected.

### Example 3

A 25% micronized glass frit A water suspension was applied onto a crude, non-glazed porcelain stoneware tile. Application was carried out as described in Example 1. The tile was subjected to a baking cycle of 60 minutes in length with maximum temperature of 1210 °C. The amount of frit applied per square meter was 22.5 g. After baking, the ceramic support preserved the original appearance, with no gloss variation. Treatment did not reduce the Vickers hardness of the material, due to the formation of glass layer with thickness in the nanometer range. The treated tile exhibited substantial reduction of surface heterogeneity, roughness and porosity. The finished material was fully stain resistant. An ink stain could be perfectly removed with no trace of ink penetration inside the support. The corresponding untreated sample, instead, did show trace of the stain also after various, subsequent attempts of cleaning.

### Example 4

A water suspension containing 5.9% of pure nanosized zirconium hydroxide and 94.1 %, referred to ZrO₂ obtained by calcination of the hydroxide and expressed as w/w% calculated considering the dry mixture, of micronized glass frit A was applied onto a crude, non-glazed porcelain stoneware tile. Application was carried out as described in Example 1. The amount of zirconium hydroxide/frit dry mixture applied per square meter was 23.9 g. The tile was subjected to a baking cycle of 60 minutes in length with maximum temperature of 1210 °C. After baking the glassy layer containing ZrO₂ exhibited good transparency to allow underglaze decoration. The finished product also showed excellent abrasion resistance. Vickers hardness approximately tripled upon treatment, reaching a value of 2100. Wettability drastically changed, with strong rise of the critical surface tension. Simultaneously, the treated product exhibited substantial reduction of surface heterogeneity, roughness and porosity. The finished material was fully stain resistant. An ink stain could be perfectly removed with no trace of ink penetration inside the support. The corresponding untreated sample, instead, did show trace of the stain also after various, subsequent attempts of cleaning.

### Example 5

A water suspension containing 3% of pure nanosized zirconium hydroxide and 97% of micronized glass frit B was applied onto a crude, non-glazed porcelain stoneware tile. Application was carried out as described in Example 1. The amount of zirconium hydroxide/frit dry mixture applied per square meter was 23.8 g. The tile was subjected to a baking cycle of 60 minutes in length with maximum temperature of 1210 °C. After baking the glassy layer containing ZrO₂ exhibited good transparency to allow underglaze decoration. The sample also showed excellent abrasion resistance. Vickers hardness increased upon treatment reaching a value of 1280. Wettability drastically changed, with strong rise of the critical surface tension. Simultaneously, the treated product exhibited substantial reduction of surface heterogeneity, roughness and porosity. The finished material was fully stain resistant. An ink stain could be perfectly removed with no trace of ink penetration inside the support. The corresponding untreated sample, instead, did show trace of the stain also after various, subsequent attempts of cleaning.

### Example 6

A mixture of 10% pure nanosized zirconium hydroxide and 90% micronized frit C could be applied either directly within the biscuit of crockery, or by spraying of the mixture water suspension onto the crude material, or by immersion of the biscuit into the mixture water suspension. The amount of zirconium hydroxide/frit dry mixture applied per square meter was 52 g. The product was submitted to a baking cycle with a maximum temperature of 1070-1090 °C. The finished material showed a remarkably increased Vickers hardness of 1500.

### Example 7

Sanitary products were treated by a mixture composed by 18% of pure nanosized zirconium hydroxide and 82% of micronized frit D. Application of the mixture could be performed as described in Example 6. The amount of dry mixture applied per square meter was 60 g. After baking at 1200-1250 °C, the finished product showed a remarkable Vickers hardness of 1600.

### Example 8

Electrical insulators could be treated by application of a mixture constituted by 20% of pure nanosized zirconium hydroxide and 80% of micronized frit E. The mixture water suspension was applied by spraying, or a gel obtained by addition of a gelling agent could be spread onto the surface. The amount of dry mixture applied per square meter was 65 g. After baking at 1200-1250 °C, the treated product showed a Vickers hardness of 1800.

### Example 9

Technical porcelain could be treated by a mixture composed by 28% of pure nanosized zirconium hydroxide and 72% of micronized frit F. Application could be carried out as described for Example 8. The treated product baked at 1400-1450 °C. The amount of dry mixture applied per square meter was 75 g. Vickers hardness strongly increased upon treatment, reaching a value of 2000.

Zirconium hydroxide particles dimensions were determined by Dynamic Light Scattering (DLS) and Scanning Electron Microscopy (SEM).

Frit particles dimensions were determined by means of laser COULTER LS 130.

Treated supports were characterized by X-ray diffractometry and scanning electron microscopy equipped by EDS analysis system. Vickers hardness, wettability and abrasion and stain resistance were also determined.

Small angle XRD analysis revealed that, as expected, the produced ZrO₂ is monoclinic, *i.e.* the pure zirconia phase stable at room temperature and ambient pressure.

The surface morphology of both treated and untreated products was investigated by SEM. Information about surface chemical composition was obtained by EDS analysis system. Homogeneously distributed micrometric ZrO₂ aggregates, formed by sintered nanosized units, are obtained when pure zirconium hydroxide is applied, alone, onto non-glazed stoneware. Analogous treatment of glazed supports gives substantially different results: Nanoparticles with diameter ranging between 100 and 500 nm are visible as individual units forming ZrO₂ clusters. Finally, treatment of non-glazed stoneware by suspension of glass frit and nanosized zirconium hydroxide results into the production of a homogenous, nonporous surface, resistant to soil penetration. Zirconia nanoparticles of about 100 nm are visible as individual units homogeneously distributed throughout the surface.

Significant Vickers hardness increases ranging between two and five-fold were recorded in all cases. A two-fold Vickers hardness increase is determined when non-purified ZrO(OH)₂ is applied onto non-glazed porcelain stoneware. Analogously, the hardness doubles when purified nanosized zirconium hydroxide is employed for the treatment of glazed materials. An outstanding five-fold hardness enhancement is achieved by treatment of non-glazed porcelain stoneware with pure ZrO(OH)₂. A Vickers hardness increment of about 1.5-3 times is registered when ZrO₂ is used together with frit to produce stain resistant products. On the contrary, treatment of the same material by commercial, micrometric zirconia drastically alters the surface properties and the hardness increment registered is practically imperceptible.

Wettability of treated and corresponding untreated ceramics was investigated by measuring the contact angle, θ, of drops produced onto the ceramic supports by a series of water/methanol mixtures of differing surface tension. Wettability of a solid surface depends upon its chemical nature, homogeneity, roughness and porosity. Treatment by pure zirconium hydroxide water dispersions does not alter the wettability of non-glazed porcelain stoneware. On the contrary, treatment of the same material by commercial, micrometric zirconia significantly alters the surface properties. The increased roughness and porosity of the material result into a decrease of the critical surface tension. When glazed porcelain stoneware is treated by pure ZrO(OH)₂, the critical surface tension drastically rises. The material porosity, instead, given by the change of the contact angle with time, remains unaffected. Finally, for non-glazed porcelain stoneware, treatment by mixtures of pure nanosized zirconium hydroxide and micronized frits drastically changes wettability, with exceptional increase of the critical surface tension. The shape of the drops produced indicates a conspicuous reduction of both surface roughness and heterogeneity. Simultaneously, the porosity is strongly diminished with production of a closed surface completely resistant to soil penetration.

All treated samples display excellent resistance to mechanical abrasion.

Stain resistance was determined by pouring ink on the tile surface and subsequent removal by a tissue soaked in alcohol.

## Claims

1. Compositions for the coating of ceramic supports comprising micronized glass frits and/or nanosized zirconium hydroxide.

2. Compositions according to claim 1 wherein the zirconium hydroxide has a purity comprised between 50% and 99%

3. Compositions according to Claim 2 wherein the zirconium hydroxide has a pu rity of 99%.

4. Compositions according to Claims 1 - 3 wherein the frits used are those normally employed in the ceramic field for the production of glazes.

5. Compositions according to Claims 1 - 4 wherein the micronized glass frit has dimensions ranging between 0.1 and 80 µm

6. Compositions according to Claim 5 wherein the micronized glass frit has dimensions ranging between 0.1-30 µm.

7. Compositions according to Claim 6 wherein the micronized glass frit has dimensions ranging between 0.1-15 µm.

8. Composition according to Claims 5 - 7 wherein 65% of particles possess dimension lower than 3 µm.

9. Composition according to Claim 8 wherein 25% of the particles have dimensions lower than 1 µm.

10. Compositions according to Claims 1 - 9 wherein the nanosized zirconium hydroxide particles have dimensions comprised between 10 and 1000 nm.

11. Compositions according to Claim 10 wherein the nanosized zirconium hydroxide particles have dimensions comprised between 10 and 500 nm.

12. Suspensions comprising a composition according to Claims 1-11 in water or in ethanol, propanol and isopropanol.

13. Suspensions according to Claim 12 wherein water is used as liquid medium.

14. Suspensions according to Claims 12 - 13 comprising also gelling agents chosen in the group consisting of: cellulose, modified celluloses, starch, guar gums, xanthan gums.

15. Suspension according to Claim 14 wherein the gelling agents are in an amount comprised between 0.1% to 10%, preferably within 0.1-1% for viscous suspensions, and between 2-5% for gels.

16. Suspensions according to claims 12 - 15 comprising also suspending agents chosen in the group consisting of polyphosphates, group I and II chlorides, hydroxides, carbonates, sodium silicate, oxalates, sodium humate and tannate, polyacritales, bentonite.

17. Suspensions according to Claim 16 wherein the amount of suspending agent used ranges between 0.1 and 1% of dry material.

18. Process for producing ceramic product coating wherein:
- a suspension according to Claims 12 - 17 is applied on the surface of said ceramic;
- the ceramic is baked at the desired temperature with formation of nano- and micro-sized zirconia *in situ* by zirconium hydroxide calcination.

19. Ceramic products comprising a coating obtained by baking a suspension according to Claims 12 - 17 applied on the surface of said ceramic products before baking.

20. Ceramic product according to Claim 19 wherein the baking step is performed at temperature comprised between 600 and 1450 °C.

21. Ceramic product according to claims 19 and 20, wherein such ceramic product is stain resistant, possess high mechanical resistance and is anti-slip.
